Europäisches Patentamt

(19) European Patent Office

Office européen des brevets

(11) Numéro de publication: **0 231 715**
**B1**

(12) **FASCICULE DE BREVET EUROPEEN**

(45) Date de publication du fascicule du brevet:
08.08.90

(21) Numéro de dépôt: **86420302.1**

(22) Date de dépôt: **15.12.86**

(51) Int. Cl.⁵: **C01F 7/14**

(54) **Procédé d'obtention, avec une forte productivité de trihydroxyde d'aluminium, de haute pureté et de diamètre médian inférieur à 4 micromètres, réglé à la demande.**

(30) Priorité: **17.12.85 FR 8519545**

(43) Date de publication de la demande:
**12.08.87 Bulletin 87/33**

(45) Mention de la délivrance du brevet:
**08.08.90 Bulletin 90/32**

(84) Etats contractants désignés:
**AT BE CH DE ES FR GB GR IT LI LU NL SE**

(56) Documents cités:
**FR-A- 2 534 898**
**FR-A- 2 534 899**
**GB-A- 799 243**
**US-A- 3 607 140**

(73) Titulaire: **ALUMINIUM PECHINEY, 23, rue Balzac, F-75008 Paris Cédex 08(FR)**

(72) Inventeur: **Puig, Jean-Philippe, Clos Pascal - Bât.B3§Avenue Alfred Capus, F-13090 Aix en Provence(FR)**

(74) Mandataire: **Pascaud, Claude et al, PECHINEY 28, rue de Bonnel, F-69433 Lyon Cédex 3(FR)**

ACTORUM AG

**Description**

## 1. DOMAINE TECHNIQUE

L'invention concerne un procédé d'obtention à forte productivité de trihydroxyde d'aluminium de haute pureté de diamètre médian inférieur à 4 micromètres, à distribution unimodale et faible dispersion, réglé à la demande. Elle consiste en une double décomposition d'une liqueur sursaturée d'aluminate de sodium issue du cycle Bayer, en présence d'une amorce de trihydroxyde broyé de surface spécifique BET au moins égale à 8 m²/g. Cette invention constitue un perfectionnement du brevet français FR-A-2 534 899.

## 2. PROBLEME POSE

Depuis longtemps déjà, il est connu de réaliser la précipitation du trihydroxyde d'aluminium d'une solution d'aluminate de sodium sursaturée par l'ajout d'une amorce constituée par du trihydroxyde d'aluminium antérieurement cristallisé, car, la génération spontanée de germes cristallins au sein d'une telle solution se révèle extrèmement lente et difficile à réaliser, voire même inexistante selon les conditions de température et de concentration du milieu traité.

C'est pourquoi, il est de pratique courante dans le procédé Bayer de favoriser la précipitation du trihydroxyde d'aluminium à partir des solutions d'aluminate de sodium sursaturées résultant de l'attaque alcaline de minerais alumineux grâce au recyclage d'une fraction importante du trihydroxyde d'aluminium obtenu dans un cycle précédent.

Mais, tel qu'il est réalisé, ce procédé d'amorçage conduit non seulement au recyclage d'une quantité très importante de trihydroxyde d'aluminium antérieurement précipité, mais surtout à l'obtention de grains de trihydroxyde d'aluminium dont les caractéristiques granulométriques et la pureté chimique ne satisfont pas aux exigences de certaines applications, comme par exemple les charges ignifugeantes pour les polymères synthétiques, les abrasifs doux en cosmétologie et surtout les céramiques à base alumine dont les conditions d'elaboration tout d'abord, puis les performances à l'utilisation dépendent principalement des caractéristiques physico-chimiques des poudres d'alumine employées.

Pour cela, l'homme de l'art souhaite pouvoir produire du trihydrate d'aluminium de haute pureté dcnt la répartition des tailles de grains soit très resserrée et centrée sur un diamètre médian généralement inférieur à 4 micromètres sans pour autant que les conditions de production d'un tel trihydroxyde d'aluminium par leur complexité, et surtout leur faible productivité, rendent le procédé économiquement inexploitable.

## 3. ETAT DE LA TECHNIQUE

Parmi les solutions connues de l'homme de l'art, certaines nécessitent l'emploi de moyens mécaniques, d'autres font appel aux ressources de la chimie, mais aucune ne permet l'obtention de trihydroxyde d'aluminium satisfaisant pleinement au triple critère de pureté, de granulométrie fine et resserrée et de haute productivité.

Ainsi, le brevet, français FR-A-2 298 510 revendique l'obtention d'un hydroxyde d'aluminium destiné à la cosmétologie, dont le diamètre moyen est compris entre 1 et 25 micromètres, par broyage d'un hydroxyde grossier, en présence d'un acide organique. Si un tel procédé peut être utilisé pour l'obtention d'hydroxyde d'aluminium ayant un diamètre moyen supérieur à 15 micromètres, son efficacité pour atteindre les diamètres inférieurs à 19 micromètres devient discutable, compte tenu de la consommation d'énergie et des moyens de broyage à mettre en oeuvre dans le cadre d'une production industrielle et cela sans avoir pris en compte la nécessaire purification initiale de l'hydroxyde d'aluminium s'il est issu directement du cycle Bayer conventionnel.

Parmi les procédé utilisant les ressources de la chimie, la plupart préconisent la préparation d'une amorce à grains très fins et de taille régulière qui est utilisée ensuite pour la décomposition d'une solution sursaturée d'aluminate de sodium.

Ainsi, dans le brevet FR-A-1 290 582, on précipite un gel par dilution soudaine et brutale d'une solution d'aluminate de sodium fortement concentrée. Ce gel formé de sphérules gonflées d'eau, contenant de nombreux germes microscopiques d'hydroxyded'aluminium, constitue l'amorce. Dans le brevet FR-A-2 041 750 l'amorce fine est obtenue en 2 étapes, tout d'abord l'on précipite un gel par carbonatation d'une solution d'aluminate de sodium, qui est ensuite transformé en une phase cristalline stable par mise en contact de ce gel avec une solution sursaturée d'aluminate de sodium. Une procédure similaire est décrite aussi dans le brevet US 2 549 549.

Ces procédés chimiques ont en commun de ne pouvoir maitriser parfaitement la taille des particules de l'amorce, en raison de la mauvaise reproductibilité des qualités du gel et de son marque de stabilité dans le temps. Il en résulte des variations significatives de granulométrie du trihydroxyde d'aluminium précipité à partir de ces types d'amorces. Par ailleurs, les problèmes de pureté et de productivité ne sont pas pris en compte.

Le brevet US 3 838 980 complète l'effet d'affinement de la granulométrie du trihydroxyde d'aluminium précipité à partir d'une amorce fine, par un broyage final de l'alumine calcinée afin de ramener à moins de 5 micromètres la taille des grains élémentaires. Ce brevet met en outre en évidence l'élimination d'une fraction significative des ions sodium et fluor qui sont habituellement piégés dans la structure du trihydroxyde d'aluminium lors de sa précipitation à partir d'une amorce grossière. Toutefois, l'élimination des impuretés présentes à l'état de micro-particules d'oxydes, d'hydrates ou de sels métalliques de fer, calcium, zinc, titane, plomb, silicium, etc... dans la solution sursaturée à décomposer n'est pas examinée ni les aspects rendement et productivité du procédé.

Le brevet français FR-A-2 534 899 dont la présente demande constitue un perfectionnement, apporte une solution satisfaisante au problème de la maitrise de la granulométrie du trihydroxyde d'aluminium lors de sa précipitation, notamment pour l'obtention de particules de moins de 4 micromètres, dont la répartition des tailles de grains soit très resserrée, tout en conservant une bonne productivité, proche de 80 grammes d'alumine par litre de solution. Ce résultat est obtenu par décomposition d'une solution sursaturée d'aluminate de sodium en présence d'une amorce de trihydroxyde d'aluminium broyé dont la surface spécifique BET est au moins égale à 8m²/g. Par ce moyen, les caractéristiques de l'amorce sont contrôlées et compte tenu de sa grande surface spécifique, de petites quantités d'amorce suffisent à précipiter un trihydroxyde d'aluminium dont la finesse, effet surprenant, est plus grande que celle de l'amorce broyée. Là encore, toutefois, la pureté du trihydroxyde précipité s'avère insuffisante pour un certain nombre d'applications.

Pour l'homme de l'art, l'adaptation d'un procédé d'épuration des solutions d'aluminate de sodium sursaturé issues du cycle Bayer est donc une nécessité avant de mette en œuvre un quelconque procédé de précipitation de trihydroxyde d'aluminium à grain fin, fût-il avec une productivité satisfaisante selon FR-A 2 534 899. Le choix est restreint par le fait qu'il est difficile d'effectuer la séparation par filtration de micro-suspensions d'impuretés ($Fe_2O_3$, $TiO_2$, $SiO_2$, etc...) à l'état solide ou colloïdal, dans les solutions chaudes d'aluminate de sodium sursaturées. Cela en raison, à la fois des volumes de solution à traiter et des seuils d'arrêt limités que l'on peut raisonnablement atteindre, même avec l'emploi d'adjuvants de filtration et de floculants.

Une technique consistant à piéger les microsuspensions d'impuretés sur une amorce activée par un début de décomposition de la solution sursaturée d'aluminate de sodium est décrite dans les brevets GB 799 243 et US 3 607 140. Des diminutions très importantes des teneurs en fer et en titane sont obtenues par fixation de ces impuretés sur l'amorce activée qui, jouant le rôle de piège, doit être éliminée fréquemment du circuit pour être purifiée et recyclée ou tout simplement déclassée. Compte tenu des quantités d'amorces à mettre en jeu (30 g/l à plus de 300 g/l) et à régénérer ou à déclasser périodiquement, ces procédés s'avèrent coûteux dans leur exploitation et les productivités demeurent relativement faibles (moins de 60 g d'$Al_2O_3$ par litre de solution) lors de la décomposition finale.

## 4. OBJET DE L'INVENTION

L'invention concerne au procédé d'obtention de trihydroxyde d'aluminium avec un diamètre médian réglé à la demande à une valeur inférieure à 4 micromètres, à distribution unimodale et faible dispersion consistant à effectuer la décomposition d'une solution sursaturée d'aluminate de sodium en présence d'une amorce broyée de trihydroxyde d'aluminium pur issu d'un précédent cycle de décomposition et dans les conditions définies par le brevet FR-A 2 534 899 selon lequel on forme, avec une amorce broyée de surface spécifique BET d'au moins 8 m²/g, sous agitation, une suspension développant une surface totale d'au moins 100 m² par litre de solution sursaturée d'aluminate de sodium à une température comprise entre 30°C et 80°C, le rapport pondéral des concentrations $Al_2O_3$ dissous/$Na_2O$ dissous devant être compris entre 0,8 et 1,2 et la concentration en $Na_2O$ dissous devant être comprise entre 100 et 200 g/l; cette décompostion étant poursuivie jusqu'à l'obtention d'un rapport final des concentrations $Al_2O_3$ dissous/$Na_2O$ dissous compris entre 0,35 et 0,65 et étant suivie d'une filtration du trihydroxyde d'aluminium.

Le nouveau procédé selon l'invention est caractérisé en ce que, dans le but d'obtenir une alumine de faible teneur en impuretés (Fe < 10 ppm/$Al_2O_3$, Si < 20 ppm/$Al_2O_3$, Zn < 2 ppm/$Al_2O_3$...), tout en conservant une productivité d'au moins 75 g d'alumine par litre de solution décomposée, on met en contact, dans une étape préalable dite "de prédécomposition", la solution sursaturée d'aluminate de sodium à décomposer, de concentration en $Na_2O$ dissous comprise entre 150 g/l et 250 g/l avec un rapport pondéral des concentrations $Al_2O_3$ dissous/$Na_2O$ dissous compris entre 0,9 et 1,3 pendant une durée comprise entre 1 heure et 5 heures, sous agitation et à une température comprise entre 70°C et 90°C, avec une faible quantité d'amorce de trihydroxyde d'aluminium broyé, de surface spécifique BET au moins égale à 8 m²/g et dans la proportion de 1 g à 10 g d'$Al_2O_3$ par litre de solution, puis on sépare ladite solution à décomposer de la phase solide constituée de trihydroxyde d'aluminium impur qui est éliminé.

A noter que la surface spécifique BET développée par broyage est la différence des surfaces spécifiques BET de l'amorce avant et après broyage. La surface spécifique BET des amorces avant broyage étant dans le cas présent très faible, la surface spécifique développée représente en fait la surface spécifique de l'amorce broyée.

La demanderesse, lors de ses essais de décomposition, sous agitation, des solutions sursaturées d'aluminate de sodium, en présence d'amorce de trihydroxyde d'aluminium à haute surface spécifique BET développée par broyage de 0,1 m²/g à l'origine, à plus de 8 m²/g a constaté indépendamment de l'effet d'affinement du trihydroxyde précipité, un effet important de piégeage, comparable à une adsorption, des microparticules en suspension dans la solution à décomposer et cela en précence seulement d'une faible quantité d'amorce broyée à plus de 8 m²/g de surface développée. De plus, cet effet de piégeage est encore accentué en tout début de décomposition de la solution sursaturée par l'apparition uniforme de nouveaux germes de trihydroxyde d'aluminium donc de nouvelles surfaces de contact au sein de la suspension. C'est ainsi qu'après 1 à 3 heures de décomposition, correspondant à la précipitation de 5 à 15% de l'alumine en solution, on a obtenu après séparation de la phase solide un taux d'élimination des impuretés dans la solution sursaturée prédécomposée, ou "taux d'épuration", d'environ 90% en poids des impuretés comme Fe, Ca, Zn présentes initialement dans la solution sursaturée. En effet, les microparticules en suspension à l'état solide ou colloïdal sont généralement des oxydes, hydrates ou sels métalliques de fer, calcium, titane, zinc, plomb et silicium qui n'ont pu en raison de leur extrême finesse, être séparées de la phase liquide par décantation et filtration après attaque alcaline de la bauxite. Elles peuvent aussi se former par précipitation au cours de opérations de dilution et de refroidissement qui accompagnent la décantation et la séparation de la liqueur après attaque.

La demanderesse a déterminé, par ailleurs, les conditions les plus favorables à l'obtention d'un trihydroxyde d'aluminium de haute pureté, de diamètre médian inférieur à 4 micromètres avec une granulométrie resserrée et tout en conservant une productivité d'au moins 75 grammes d'alumine par litre de solution décomposée.

Ainsi, la surface développée par broyage du trihydroxyde d'aluminium utilisé comme amorce aussi bien à l'étape de prédécomposition qu'à l'étape de décomposition de la solution sursaturée d'aluminate de sodium doit être de préférence comprise entre 10 m²/g et 25 m²/g.

Par ailleurs, le trihydroxyde d'aluminium utilisé après broyage comme amorce à l'étape de prédécomposition de la solution sursaturée d'aluminate de sodium peut provenir d'une source quelconque de production de trihydroxyde d'aluminium ou de préférence de l'étape de décomposition du procédé selon l'invention.

Le broyage du trihydroxyde d'aluminium utilisé comme amorce à l'étape de prédécomposition, peut être effectué à sec on en suspension dans un milieu aqueux ou alcoolique.

La solution d'aluminate de sodium sursaturée traitée selon le procédé de l'invention et dont la concentration en soude est comprise entre 150 g/litre et 250 g/l exprimés en $Na_2O$ caustique, a un rapport de concentration pondérale $Al_2O_3$ dissous g/l /$Na_2O$ dissous g/l compris de préférence entre 0,9 et 1,3.Le temps de mise en contact de ladite solution avec l'amorce du trihydroxyde broyé, à une température comprise entre 70°C et 90°C et sous agitation à l'étape de prédécomposition est, de préférence, de 1 à 3 heures et dans la proportion de 25 m² à 150 m² de surface BET développée, par litre de solution sursaturée. Au terme de l'étape de prédécomposition la suspension est filtrée, la phase solide chargée en impuretés est mise hors circuit pour régénération ou déclassement tandis que la phase liquide constituée par la solution d'aluminate de sodium épurée est envoyée à l'étape de décomposition. Les contrôles des teneurs des principales impuretés dans les solutions sursaturées d'aluminate de sodium avant et après l'étape de prédécomposition mettent en évidence des taux d'épuration supérieurs à 95% pour Fe et Ca et supérieurs à 80 % pour Zn.

Avant l'étape de décomposition, la solution sursaturée d'aluminate de sodium épurée, dont le rapport pondéral de concentrations $Al_2O_3$ dissous g/litre /$Na_2O$ dissous g/l doit être alors compris entre 0,8 et 1,2, mais de préférence entre 1 et 1,2 est diluée si nécessaire pour conserver sa concentration en $Na_2O$ dissous entre 100 g/l et 200 g/l. La solution à décomposer est ensuite mise en contact, sous agitation avec l'amorce de trihydroxyde d'aluminium purifié et broyé prélevé à l'étape de décomposition d'un précédent cycle. A noter que, comme l'amorce de l'étape de prédécomposition, l'amorce de l'étape de décomposition peut être broyée à sec ou en suspension dans un milieu aqueux ou alcoolique jusqu'à l'obtention de la surface spécifique BET requise par le procédé.

A l'étape de décomposition, la quantité d'amorce broyée de trihydroxyde d'aluminium introduite dans la solution d'aluminate de sodium sursaturée à décomposer est telle que sa surface totale développée est comprise entre 100 et 600 m² par litre et de préférence entre 200 m² et 400 m² par litre de solution à décomposer sous agitation et à une température comprise entre 30°C et 80°C et de préférence entre 40°C et 60°C, jusqu'à l'obtention d'un rapport pondéral de concentration $Al_2O_3$ dissous g/litre /$Na_2O$ dissous g/ litre compris entre 0,35 et 0,65, mais de préférence compris entre 0,40 et 0,60. Après séparation de la phase solide par filtration, on obtient avec une productivité au moins égale à 75 d'$Al_2O_3$ par litre de solution, un trihydroxyde d'aluminium dont le diamètre médian est inférieur à 4 micromètres avec une granulométrie resserrée et dont la teneur en impuretés est très faible.

| | Fe | Si | Zn | Ti | Pb | V | P |
|---|---|---|---|---|---|---|---|
| ppm/$Al_2O_3$ | <10 | <20 | <2 | <5 | <1 | <2 | <2 |

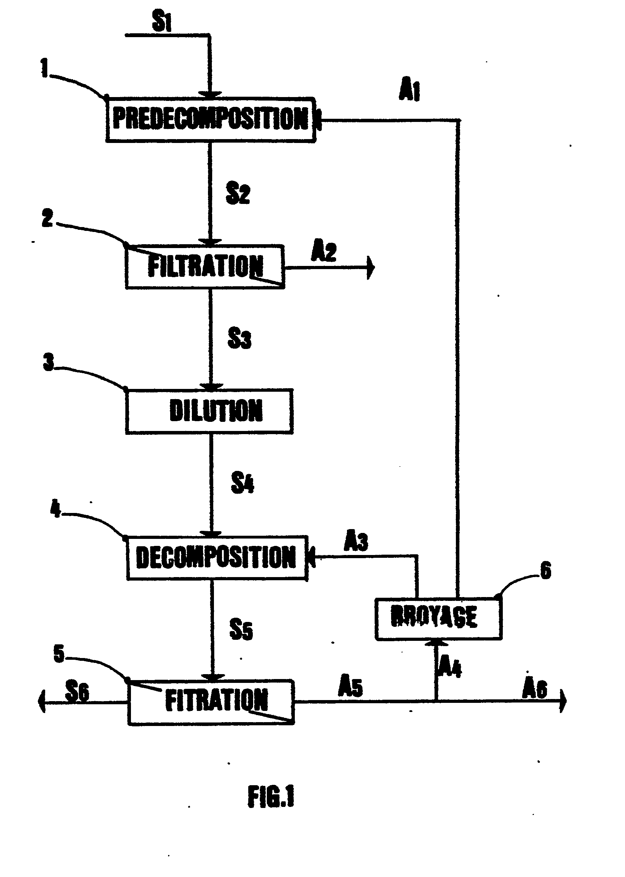

La mise en oeuvre du procédé, schématisé dans sa réalisation préférée sur la figure 1 est la suivante :

La solution d'aluminate de sodium, saturée S1 est épurée avant décomposition, par mise en contact sous agitation et à la température requise, à l'étape de prédécomposition (1), avec l'amorce de trihydroxyde d'aluminium broyé A1, prélevée en faible quantité sur la fraction A4 de trihydroxyde d'aluminium purifié destinée après broyage (6) à la préparation des amorces A1 et A3. La suspension S2 issue de l'étape de prédécomposition (1) est filtrée au poste (2). La phase solide de trihydroxyde d'aluminium pollué A2 est mise hors circuit pour régénération ou déclassement. Le filtrat d'aluminate de sodium S3 est éventuellement dilué au poste de dilution (3) pour ajuster la concentration en $Na_2O$. La solution S4 issue du poste dilution (3) est envoyée à l'étape de décomposition (4), est mise en présence, sous agitation et à la température requise, d'amorce broyée A3 de trihydroxyde d'aluminium purifié A4. La suspension S5 issue de l'étape de décomposition (4) est filtrée au poste (5).

Le filtrat S6 constitué par la solution d'aluminate de sodium décomposée est recyclé à l'attaque de bauxite en amont alors que la phase solide A5 de trihydroxyde d'aluminium purifié est partagée entre la production A6 et l'amorce A4 destinée à la préparation d'amorces broyées A1 et A3 au poste de broyage (6).

Les caractéristiques essentielles de l'invention seront encore mieux perçues grâce à la description des exemples suivants :

Exemple 1

Cet exemple illustre la possibilité de produire à la demande, selon le procédé de l'invention, du trihydroxyde d'aluminium de grande pureté, de diamètre médian centré sur 1 micromètre et de granulométrie resserrée, avec une productivité supérieure à 80 g $Al_2O_3$ par litre de solution.

Pour ce faire, et dans la première étape du procédé selon l'invention, on a prélevé du trihydroxyde d'aluminium industriel provenant de l'attaque alcaline d'une bauxite selon le procédé Bayer. Puis, dans le but d'effectuer le broyage, on a réalisé une suspension aqueuse dudit trihydroxyde d'aluminium à 100 grammes par litre de matière sèche.

Le broyage a été effectué au moyen d'un appareillage de type connu, composé d'un cylindre à axe de rotation horizontal, d'un diamètre utile de 10 cm, dont les corps broyants sont constitués par des billes de corindon. On a ainsi soumis à broyage 1 litre de la suspension précitée au moyen de 2 kilos de billes ayant un diamètre de 9 mm et 1 kilo de billes ayant un diamètre de 6 mm.

Après un temps de broyage de 20 h, on a obtenu des particules de trihydroxyde d'aluminium broyées ayant une surface BET de 15 m² par gramme mesurée selon la méthode décrite dans les normes AFNOR X 11-621 et X-11 622, alors que le trihydroxyde d'aluminium disposait d'une surface BET avant broyage de 0,10 m² par gramme.

On a alors introduit dans un réacteur approprié 2 litres de solution sursaturée d'aluminate de sodium avec une concentration en $Na_2O$ caustique de 200 g/litre et un rapport pondéral de concentration $Al_2O_3$ dissous /$Na_2O$ dissous de 1,2 et 10 grammes de trihydroxyde d'aluminium broyé (sous forme de suspension dans l'eau), de telle manière que l'on dispose d'une surface d'amorce de 75 m² par litre de solution sursaturée d'aluminate de sodium.

La suspension ainsi réalisée a été mise sous agitation au moyen d'un agitateur à axe vertical à larges pales tournant à 60 tours par minute. La température de la suspension était maintenue à 78°C tout au long de l'opération de prédécomposition qui a duré 2 heures.

A l'issue de la prédécomposition, le rapport pondéral $Al_2O_3$ dissous /$Na_2O$ dissous était de 1,10 indiquant ainsi que 8% seulement de l'alumine en solution avaient précipités. Après séparation de la phase solide, la solution sursaturée d'aluminate de sodium prédécomposée avait les teneurs suivantes mettant en évidence l'efficacité de l'épuration par comparaison dans le tableau ci-après avec les teneurs initiales :

| Teneurs en impuretés (mg/l) | Fe | Si | Zn | Ca |
|---|---|---|---|---|
| Solution initiale | 45 | 30 | 80 | 30 |
| Solution après pré-décomposition | ⟨1 | 25 | ⟨10 | ⟨1 |

Après dilution à 150 g/l de $Na_2O$, on a introduit 2 litres de ladite solution prédécomposée et épurée dans un réacteur approprié et 40 grammes d'une amorce de trihydroxyde d'aluminium purifié et broyé jusqu'à une surface spécifique BET de 20 m²/g. Le trihydroxyde d'aluminium prélevé lors d'une précédente décomposition de la même liqueur a été broyé pendant 32 heures sous forme de suspension aqueuse dans le dispositif décrit précédemment pour atteindre la surface BET développée à 20 m²/g. La suspension développant une surface de 400 m²/litre ainsi réalisée a été mise sous agitation au moyen d'un agitateur à axe vertical à larges pales tournant à 60 tours par minute. La température de la suspension pendant la décomposition qui a duré 24 heures était de 53°C.

Au terme de la décomposition, le rapport pondéral de concentration $Al_2O_3$ dissous g/l /$Na_2O$ dissous g/l était de 0,5, correspondant à une productivité de 90 grammes d'$Al_2O_3$ par litre de solution. Après séparation de la phase liquide le trihydroxyde d'aluminium recueilli avait les caractéristiques suivantes :

| Teneurs finales en impuretés | Fe | Si | Zn | Ti | V | P | Ca | Ga | Li |
|---|---|---|---|---|---|---|---|---|---|
| $ppm/Al_2O_3$ | 5 | 18 | < 2 | 2 | < 2 | < 2 | 7 | < 5 | < 5 |

Les teneurs en uranium et en thorium étaient respectivement de 20ppb/$Al_2O_3$ et de 2 ppb/$Al_2O_3$.

Le diamètre médian D50 mesuré par la méthode de sédimentation décrite dans la norme AFNOR XII-683, était de 1,1 micromètre et tous les grains avaient un diamètre inférieur à 5 micromètres.

A titre indicatif, un trihydroxyde d'aluminium de granulométrie similaire mais précipité dans les conditions du brevet principal FR-A-2.534.899, c'est-à-dire sans l'étape initiale de prédécomposition et en utilisant une amorce broyée de trihydroxyde d'aluminium non purifié était caractérisé par les teneurs en impuretés suivantes :

| Teneurs en impuretés | Fe | Si | Zn | Ti | V | P | Ca | Ga | Li |
|---|---|---|---|---|---|---|---|---|---|
| $ppm/Al_2O_3$ | 175 | 40 | 30 | 10 | 5 | 5 | 130 | 75 | 19 |

Les teneurs en uranium et en thorium étaient respectivement de 240 ppb/$Al_2O_3$ et de 20 ppb/$Al_2O_3$.

Exemple 2

Cet exemple illustre une autre possibilité de produire à la demande, selon le procédé de l'invention, du trihydroxyde d'aluminium de grande pureté, de diamètre médian centré sur 2,5 micromètres et de granulométrie resserrée tout en conservant une productivité supérieure à 75 g d'$Al_2O_3$ par litre de solution d'aluminate de sodium sursaturée à décomposer.

Dans la première étape dite de prédécomposition, on a utilisé comme amorce du trihydroxyde d'aluminium purifié issu d'un précédent cycle de décomposition. Le broyage a été effectué à sec, sur 100 g de trihydroxyde d'aluminium dans le même appareillage et avec les même corps broyants que ceux utilisés dans l'exemple 1. Après 32 heures de broyage, on a obtenu des particules de trihydroxyde d'aluminium de surface spécifique BET égale à 20 m²/g. On a alors introduit dans un réacteur approprié, 2 litres de solution sursaturée d'aluminate de sodium dont la concentration en $Na_2O$ dissous était de 110 g/l et le rapport pondéral de concentration $Al_2O_3$ dissous /$Na_2O$ dissous de 1,20 avec 10 grammes de trihydroxyde d'aluminium broyé à 20 m²/g de surface spécifique BET de manière à disposer d'une surface d'amorce équivalente à 100 m² par litre de solution sursaturée d'aluminate de sodium. La suspension ainsi réalisée a été mise sous agitation dans les mêmes conditions que celles décrites dans l'exemple 1 mais la température de la suspension était maintenue à 88°C tout au long de l'opération de prédécomposition qui a duré 2 heures.

A l'issue de la prédécomposition, le rapport pondéral de concentration $Al_2O_3$ dissous /$Na_2O$ dissous était de 1,10 indiquant que 8% seulement de l'alumine en solution avait précipité. Après séparation de la phase solide, la solution sursaturée d'aluminate de sodium prédécomposée avait les teneurs suivantes en impuretés comparées dans le tableau ci-après aux teneurs initiales :

| Teneurs en impuretés | Fe | Si | Zn | Ca |
|---|---|---|---|---|
| Solution initiale | 58 | 25 | 90 | 35 |
| Solution après pré-décomposition | < 1 | 20 | < 10 | < 1 |

On a introduit ensuite 2 litres de ladite solution prédécomposée et épurée dans un réacteur approprié, avec 20 grammes d'amorce de trihydroxyde d'aluminium purifié et broyé à sec jusqu'à obtenir une surface spécifique BET de 20 m²/g (une fraction de ce trihydroxyde d'aluminium broyé à sec ayant été utilisée comme amorce à l'étape de prédécomposition). La suspension développant une surface de 200 m² de surface d'amorce par litre de solution, ainsi réalisée, a été mise sous agitation, au moyen d'un agitateur à axe vertical à larges pales tournant à 60 tours par minute. La température de la suspension pendant la décomposition qui a duré 20 heures a été maintenue à 50°C.

Au terme de la décomposition, le rapport pondéral de concentration $Al_2O_3$ dissous/$Na_2O$ dissous était de 0,40 correspondant à une productivité de 77 g d'$Al_2O_3$ par litre de solution.

Après séparation de la phase liquide, le trihydroxyde d'aluminium recueilli avait les caractéristiques suivantes :

| Teneurs finales en impuretés | Fe | Si | Zn | Ti | V | P | Ca | Ga | Li |
|---|---|---|---|---|---|---|---|---|---|
| ppm/Al$_2$O$_3$ | 6 | 15 | <2 | 2 | <2 | <2 | <5 | <5 | <5 |

Les teneurs en uranium et en thorium étaient respectivement de 16 ppb/Al$_2$O$_3$ et de 1,5 ppb/Al$_2$O$_3$.

Ces résultats d'analyse chimique sont également à comparer à ceux indiqués dans l'exemple 1 concernant un trihydroxyde d'aluminium précipité à partir d'une solution sursaturée d'aluminate de sodium selon FR-A-2.534.899, c'est-à-dire sans l'étape initiale de prédécomposition.

Le diamètre D50 était de 2,6 micromètres et tous les grains avaient un diamètre inférieur à 10 micromètres.

## Revendications

1. Procédé d'obtention de trihydroxyde d'aluminium avec un diamètre médian réglé à la demande à une valeur inférieure à 4 micromètres, à distribution unimodale et faible dispersion consistant à effectuer la décomposition d'une solution sursaturée d'aluminate de sodium en présence d'une amorce broyée de trihydroxyde d'aluminium pur issu d'un précédent cycle de décomposition et de surface spécifique BET au moins égale à 8 m$^2$/g, afin de former, sous agitation, une suspension développant une surface d'au moins 100 m$^2$ par litre de solution sursaturée d'aluminate de sodium à une température comprise entre 30°C et 80°C, le rapport pondéral des concentrations Al$_2$O$_3$ dissous/Na$_2$O dissous devant être compris entre 0,8 et 1,2 et la concentration en Na$_2$O dissous devant être comprise entre 100 et 200 g/l; cette décomposition étant poursuivie jusqu'à l'obtention d'un rapport pondéral final des concentrations Al$_2$O$_3$ dissous/Na$_2$O comprise entre 0,35 et 0,65 et étant suivie d'une filtration du trihydroxyde d'aluminium, caractérisé en ce que, dans le but d'obtenir une alumine de faible teneur en impuretés (Fe < 10 ppm/Al$_2$O$_3$, Si < 20 ppm/Al$_2$O$_3$, Zn < 2 ppm/Al$_2$O$_3$), tout en conservant une productivité d'au moins 75 g d'alumine par litre de solution décomposée, on met en contact, dans une étape préalable dite "de prédécomposition", la solution sursaturée d'aluminate de sodium à décomposer, de concentration en Na$_2$O dissous comprise entre 150 g/l avec un rapport pondéral des concentrations Al$_2$O$_3$ dissous/Na$_2$O dissous compris entre 0,9 et 1,3 pendant une durée comprise entre 1 heure et 5 heures, sous agitation et à une température comprise entre 70°C et 90°C, avec une faible quantité d'amorce de trihydroxyde d'aluminium broyé, de surface spécifique BET au moins égale à 8 m$^2$/g et dans la proportion de 1 g à 10 g d'Al$_2$O$_3$ par litre de solution, puis on sépare ladite solution à décomposer de la phase solide constituée de trihydroxyde d'aluminium impur qui est éliminé.

2. Procédé selon la revendication 1, caractérisé en ce que le trihydroxyde d'aluminium broyé utilisé comme amorce lors des étapes de prédécomposition, et de décomposition de la solution sursaturée d'aluminium de sodium a une surface spécifique BET développée comprise entre 10 m$^2$/g et 25 m$^2$/g.

3. Procédé selon la revendication 1, caractérisé en ce que le trihydroxyde d'aluminium utilisé comme amorce, après broyage, à l'étape de prédécomposition de la solution sursaturée d'aluminate de sodium peut provenir d'une source quelconque de production de trihydroxyde d'aluminium ou de préférence de l'étape de décomposition du procédé selon l'invention.

4. Procédé selon la revendication 1, 2 et 3, caractérisé en ce que le broyage du trihydroxyde d'aluminium utilisé comme amorce à l'étape de prédécomposition est effectué à sec.

5. Procédé selon les revendications 1, 2 et 3, caractérisé en ce que le broyage du trihydroxyde d'aluminium utilisé comme amorce à l'étape de prédécomposition est effectué en suspension dans un milieu aqueux ou alcoolique.

6. Procédé selon la revendication 1, caractérisé en ce que la quantité d'amorce de trihydroxyde d'aluminium broyé mise en contact sous agitation avec la solution sursaturée d'aluminate de sodium à l'étape de prédécomposition a une surface totale de 25 m$^2$ à 150 m$^2$ par litre.

7. Procédé selon la revendication 1, caractérisé en ce que le temps de contact de l'amorce de trihydroxyde broyé avec la solution sursaturée d'aluminate de sodium à l'étape de prédécomposition est compris entre 1 heure et 3 heures.

8. Procédé selon la revendication 1, caractérisé en ce que la solution sursaturée d'aluminate de sodium, prédécomposée a un rapport pondéral de concentration Al$_2$O$_3$ dissous g/l /Na$_2$O dissous g/l, avant décomposition, compris entre 1,0 et 1,2.

9. Procédé selon les revendications 1 et 2, caractérisé en ce que le broyage du trihydroxyde d'aluminium utilisé comme amorce à l'étape de décomposition est effectué à sec.

10. Procédé selon les revendications 1 et 2, caractérisé en ce que le broyage du trihydroxyde d'aluminium utilisé comme amorce à l'étape de décomposition est effectué en suspension dans un milieu aqueux ou alcoolique.

11. Procédé selon la revendication 1, caractérisé en ce que la quantité d'amorce de trihydroxyde d'aluminium broyé introduite dans la solution d'aluminate de sodium purifiée, à l'étape de décomposition, a une surface totale comprise entre 200 m² et 400 m² par litre de solution.

12. Procédé selon la revendication 1, caractérisé en ce que le rapport pondéral de concentration Al₂O₃ dissous g/l /Na₂O dissous g/l de la solution d'aluminate de sodium au terme de l'étape de décomposition est compris entre 0,35 et 0,65 et de préférence entre 0,40 et 0,60.

13. Procédé selon la revendication 1, caractérisé en ce que la température de la solution d'aluminate de sodium au cours de l'étape de décomposition est maintenue entre 40°C et 60°C.

## Claims

1. A process for obtaining aluminium trihydroxide with a median diameter adjusted as required to a value of less than 4 micrometers, with unimodal distribution and weak dispersion, involving decomposing a supersaturated solution of sodium aluminate in the presence of a crushed primer of pure aluminium trihydroxide issuing from a previous decomposition cycle and having a specific BET surface area of at least 8 m²/g in order to form, with stirring, a suspension which generates a surface area of at least 100 m² per litre of supersaturated solution of sodium aluminate at a temperature of between 30°C and 80°C, the ratio by weight of the concentrations of dissolved Al₂O₃/dissolved Na₂O having to be between 0.8 and 1.2 and the concentration of dissolved Na₂O having to be between 100 and 200 g/l; this decomposition being carried out until a final ratio by weight of the concentrations of dissolved Al₂O₃/Na₂O of between 0.35 and 0.65 is obtained and being followed by filtration of the aluminium trihydroxide, characterised in that, in order to obtain an alumina having a low content of impurities (Fe < 10 ppm/Al₂O₃, Si < 20 ppm/Al₂O₃, Zn < 2 ppm/Al₂O₃), while maintaining productivity of at least 75 g of alumina per litre of decomposed solution, the supersaturated solution of sodium aluminate which is to be decomposed and has a concentration of dissolved Na₂O of between 150 g/l and 250 g/l and a ratio by weight of the concentrations of dissolved Al₂O₃/ dissolved Na₂O of between 0.9 and 1.3 is brought into contact, for a period of between 1 hour and 5 hours, with stirring and at a temperature of between 70°C and 90°C, with a small quantity of crushed aluminium trihydroxide primer having a specific BET surface area of at least 8 m²/g and in a proportion of 1 g to 10 g of Al₂O₃ per litre of solution in a preliminary so-called "predecomposition" stage, then the solution to be decomposed is separated from the solid phase constituted by impure aluminium trihydroxide which is eliminated.

2. A process according to claim 1, characterised in that the crushed aluminium trihydroxide used as primer during the stages of predecomposition and decomposition of the supersaturated solution of sodium aluminate has a specific generated BET surface area of between 10 m²/g and 25 m²/g.

3. A process according to claim 1, characterised in that the aluminium trihydroxide used as primer after crushing in the stage of predecomposition of the supersaturated solution of sodium aluminate can originate from any source of aluminium trihydroxide production or preferably from the decomposition stage of the process according to the invention.

4. A process according to claims 1, 2 and 3, characterised in that the crushing of the aluminium trihydroxide used as primer in the predecomposition stage is carried out under dry conditions.

5. A process according to claims 1, 2 and 3, characterised in that the crushing of the aluminium trihydroxide used as primer in the predecomposition stage is carried out in suspension in an aqueous or alcoholic medium.

6. A process according to claim 1, characterised in that the quantity of crushed aluminium trihydroxide primer placed in contact, with stirring, with the supersaturated solution of sodium aluminate in the predecomposition stage has a total surface area of 25 m² to 150 m² per litre.

7. A process according to claim 1, characterised in that the period of contact between the crushed trihydroxide primer and the supersaturated solution of sodium aluminate in the predecomposition stage is between 1 and 3 hours.

8. A process according to claim 1, characterised in that the predecomposed supersaturated solution of sodium aluminate has a ratio by weight with a concentration of g/l of dissolved Al₂O₃/ g/l of dissolved Na₂O, before decomposition, of between 1.0 and 1.2.

9. A process according to claims 1 and 2, characterised in that the crushing of the aluminium trihydroxide used as primer in the decomposition stage is carried out under dry conditions.

10. A process according to claims 1 and 2, characterised in that the crushing of the aluminium trihydroxide used as primer in the decomposition stage is carried out in suspension in an aqueous or alcoholic medium.

11. A process according to claim 1, characterised in that the quantity of crushed aluminium trihydroxide primer introduced into the solution of purified sodium aluminate, in the decomposition stage, has a total surface area of between 200 m² and 400 m² per litre of solution.

12. A process according to claim 1, characterised in that the ratio by weight in concentration of g/l of dissolved Al₂O₃/ g/l of dissolved Na₂O of the sodium aluminate solution at the end of the decomposition stage is between 0.35 and 0.65 and preferably between 0.40 and 0.60.

13. A process according to claim 1, characterised in that the temperature of the sodium aluminate solution during the decomposition stage is kept between 40°C and 60°C.

**Patentansprüche**

1. Verfahren zur Herstellung von Aluminiumtrihydroxid mit einem nach dem Bedarf auf einen Wert unter 4 μm gesteuerten mittleren Durchmesser mit eingipfeliger Verteilung und geringer Streuung, das darin besteht, die Zersetzung einer übersättigten Natriumaluminatlösung in Gegenwart eines zerkleinerten Impfmittels aus reinem Aluminiumtrihydroxid, das von einem vorhergehenden Zersetzungszyklus stammt und eine spezifische BET-Oberfläche von mindestens 8 m²/g aufweist, vorzunehmen, um unter Rühren eine Suspension zu bilden, die eine Oberfläche von mindestens 100 m² je Liter übersättiger Natriumaluminatlösung bei einer Temperatur im Bereich von 30°C bis 80°C entwickelt, wobei das Gewichtsverhältnis der Konzentration von gelöstem $Al_2O_3$ zu gelöstem $Na_2O$ im Bereich von 0,8 bis 1,2 sein muß und die Konzentration an gelöstem $Na_2O$ im Bereich von 100 bis 200 g/l sein muß, welche Zersetzung bis zum Erhalten eines Endgewichtsverhältnisses der Konzentrationen von gelöstem $Al_2O_3$ zu gelöstem $Na_2O$ im Bereich von 0,35 bis 0,65 durchgeführt und von einer Filtration des Aluminiumtrihydroxids gefolgt wird, dadurch gekennzeichnet, daß man zwecks Erhaltens eines Aluminiumoxids mit geringem Gehalt an Verunreinigungen (Fe < 10 ppm/$Al_2O_3$, Si < 20 ppm/$Al_2O_3$, Zn < 2 ppm/$Al_2O_3$) unter Bewahrung einer Produktivität von mindestens 75 g Aluminiumoxid je Liter zersetzter Lösung in einer "Vorzersetzung" genannten Vorstufe die zu zersetzende übersättigte Natriumaluminatlösung einer Konzentration an gelöstem $Na_2O$ im Bereich von 150 g/l bis 250 g/l mit einem Gewichtsverhältnis der Konzentrationen von gelöstem $Al_2O_3$ zu gelöstem $Na_2O$ im Bereich von 0,9 bis 1,3 während einer Dauer im Bereich von 1 Stunde bis 5 Stunden unter Rühren und bei einer Temperatur im Bereich von 70°C bis 90°C mit einer geringen Impfmittelmenge aus zerkleinertem Aluminiumtrihydroxid einer spezifischen BET-Oberfläche von mindestens gleich 8 m²/g und im Verhältnis von 1 g bis 10 g $Al_2O_3$ je Liter Lösung in Kontakt bringt und dann die zu zersetzende Lösung von der festen Phase trennt, die aus unreinem Aluminiumtrihydroxid besteht, das beseitigt wird.

2. Verfahren nach dem Anspruch 1, dadurch gekennzeichnet, daß das zerkleinerte Aluminiumtrihydroxid, das als Impfmittel in den Stufen zur Vorzersetzung und zur Zersetzung der übersättigten Natriumaluminatlösung verwendet wird, eine entwickelte spezifische BET-Oberfläche im Bereich von 10 m²/g bis 25 m²/g hat.

3. Verfahren nach dem Anspruch 1, dadurch gekennzeichnet, daß das Aluminiumtrihydroxid, das nach Zerkleinerung als Impfmittel in der Vorzersetzungsstufe der übersättigten Natriumaluminatlösung verwendet wird, von irgendeiner Quelle zur Erzeugung von Aluminiumtrihydroxid oder vorzugsweise von der Zersetzungsstufe des Verfahrens gemäß der Erfindung stammen kann.

4. Verfahren nach den Ansprüchen 1, 2 und 3, dadurch gekennzeichnet, daß das Zerkleinern des als Impfmittel in der Vorzersetzungsstufe verwendeten Aluminiumtrihydroxids trocken vorgenommen wird.

5. Verfahren nach den Ansprüchen 1, 2 und 3, dadurch gekennzeichnet, daß das Zerkleinern des als Impfmittel in der Vorzersetzungsstufe verwendeten Aluminiumtrihydroxids in Suspension in einem wäßrigen oder alkoholischen Medium vorgenommen wird.

6. Verfahren nach dem Anspruch 1, dadurch gekennzeichnet, daß die Impfmittelmenge von zerkleinertem Aluminiumtrihydroxid, die unter Rühren in Kontakt mit der übersättigten Natriumaluminatlösung in der Vorzersetzungsstufe gebracht wird, eine Gesamtoberfläche von 25 m² bis 150 m² je Liter hat.

7. Verfahren nach dem Anspruch 1, dadurch gekennzeichnet, daß die Kontaktdauer des zerkleinerten Trihydroxidimpfmittels mit der übersättigten Natriumaluminatlösung in der Vorzersetzungsstufe im Bereich von 1 Stunde bis 3 Stunden ist.

8. Verfahren nach dem Anspruch 1, dadurch gekennzeichnet, daß die vorzersetzte übersättigte Natriumaluminatlösung vor der Zersetzung ein Konzentrationsgewichtsverhältnis von gelöstem $Al_2O_3$ zu gelöstem $Na_2O$ in g/l im Bereich von 1,0 bis 1,2 hat.

9. Verfahren nach dem Anspruch 1 und 2, dadurch gekennzeichnet, daß das Zerkleinern des als Impfmittel in der Zersetzungsstufe verwendeten Aluminiumtrihydroxids trocken vorgenommen wird.

10. Verfahren nach dem Anspruch 1 und 2, dadurch gekennzeichnet, daß das Zerkleinern des als Impfmittel in der Zersetzungsstufe verwendeten Aluminiumtrihydroxids in Suspension in einem wäßrigen oder alkoholischen Medium vorgenommen wird.

11. Verfahren nach dem Anspruch 1, dadurch gekennzeichnet, daß die Impfmittelmenge von zerkleinertem Aluminiumtrihydroxid, die in der Zersetzungsstufe in die gereinigte Natriumaluminatlösung eingeführt wird, eine Gesamtoberfläche im Bereich von 200 m² bis 400 m² je Liter Lösung hat.

12. Verfahren nach dem Anspruch 1, dadurch gekennzeichnet, daß das Konzentrationsgewichtsverhältnis von gelöstem $Al_2O_3$ zu gelöstem $Na_2O$ in g/l der Natriumaluminatlösung am Ende der Zersetzungsstufe im Bereich von 0,35 bis 0,65 und vorzugsweise von 0,40 bis 0,60 ist.

13. Verfahren nach dem Anspruch 1, dadurch gekennzeichnet, daß die Temperatur der Natriumaluminatlösung im Lauf der Zersetzungsstufe im Bereich von 40°C bis 60°C gehalten wird.

FIG.1